# EUROPÄISCHE PATENTANMELDUNG

(11) **EP 3 680 880 A1**
(43) Veröffentlichungstag der Anmeldung: **15.07.2020**
(21) Anmeldenummer: 20151547.5
(22) Anmeldetag: 13.01.2020
(51) Int. Cl.: G09B 23/24

(54) **SCHULUNGSSET ZUR VISUALISIERUNG VON SIMULIERTER VERKEIMUNG SOWIE ZUR VISUALISIERUNG EINES SIMULIERTEN DESINFEKTIONSERFOLGS UND VERFAHREN ZUR SIMULATION EINES DESINFEKTIONSVORGANGES**

(30) Priorität: 14.01.2019 DE 102019100804
(71) Anmelder: James, Claudia, 22880 Wedel (DE)
(72) Erfinder: James, Claudia, 22880 Wedel (DE)
(74) Vertreter: Müller Schupfner & Partner Patent- und Rechtsanwaltspartnerschaft mbB

(57) **Zusammenfassung**

Die vorliegende Erfindung betriff ein Verfahren zur Simulation einer Verkeimung und zur Simulation der Desinfektion, insbesondere des Desinfektionserfolgs, umfassend eine erste farblose Anwendungszusammensetzung, umfassend einen pH-Indikator und zumindest zwei weitere Anwendungszusammensetzungen unterschiedlichen pHs, sowie ein Schulungsset mit zumindest den drei Anwendungszusammensetzungen.

## Beschreibung

Gegenstand der Erfindung ist ein Verfahren zur Simulation einer Verkeimung und zur Simulation einer Desinfektion, insbesondere eines Desinfektionserfolgs, umfassend eine erste farblose Anwendungszusammensetzung beinhaltend einen pH-Indikator und zumindest zwei weitere Anwendungszusammensetzungen unterschiedlichen pHs sowie ein Schulungsset umfassend die drei Anwendungszusammensetzungen.

### Stand der Technik

Hände- und Flächendesinfektion sind ein wesentlicher Bestandteil der Infektionsprophylaxe im Gesundheitswesen, in der Industrie und aber auch für einen jeden Einzelnen, der Träger einer ansteckenden Krankheit ist, oder sich vor ihr schützen möchte, insbesondere dann, wenn sich die Keime leicht ausbreiten können wie bei Atemwegs- oder Durchfallerkrankungen.

Insbesondere im professionellen Umfeld - beispielsweise in Krankenhäusern, Arztpraxen, Pflegeheimen, lebensmittelverarbeitenden Betrieben, der Gastronomie oder der Pharmaindustrie - ist die Durchführung der Desinfektion Aufgabe des Personals der jeweiligen Einrichtungen. Diese müssen regelmäßig zur korrekten Durchführung der Desinfektion angehalten und geschult werden. Die Schulungen sollen in der Praxis dann dazu führen, dass die Desinfektion von Händen und Flächen, wo angezeigt a) überhaupt und b) korrekt durchgeführt wird.

Studien haben jedoch gezeigt, dass die Durchführung, insbesondere bei der für die Vermeidung von Infektionen besonders wichtigen Händedesinfektion, nicht ausreichend ist und auch im Gesundheitswesen im Schnitt nur bei ca. 50 % liegt bezogen auf alle Fälle, wo dies eigentlich angezeigt wäre.

Ein offensichtliches Problem stellt hierbei die Unsichtbarkeit von Keimen dar, weil mikrobielle Kontamination auf Händen und Flächen nicht sichtbar ist. Dadurch wird auch nicht sichtbar, wie Keimübertragungen durch das eigene Handeln stattfinden, beispielsweise bei der Behandlung und Pflege von Patienten durch Ärzte und Pflegepersonal oder bei der Produktion oder Verarbeitung von Lebensmitteln. Dies führt wiederum dazu, dass das Bewusstsein für eine mögliche Kontamination von Händen und Flächen nicht ausreicht und die Desinfektion beispielsweise durch Vergessen oder mangelnde Umsetzungsbereitschaft nicht ausreichend oft oder ausreichend gut durchgeführt wird.

Erschwerend kommt hinzu, dass auch der Erfolg der Desinfektion - also die Reduktion bzw. Eliminierung von Keimen - nicht sichtbar ist, so dass u. U., auch das Bewusstsein über den Erfolg der Desinfektion nicht ausreichend vorhanden ist. Weder die Folgen von Übertragung mikrobieller Kontamination, noch der Erfolg von Desinfektion sind also für die Handelnden unmittelbar sichtbar.

Bei der Verwendung von Desinfektionsmitteln auf Flächen aller Art ist eine korrekte Applikation von Bedeutung. Wird ein Desinfektionsmittel nicht korrekt aufgetragen, kann u. U. die gewünschte Schutzwirkung vor Infektionen bzw. der Übertragung von Infektionen nicht erzielt werden, vielmehr können Keime verschleppt werden. Es ist daher nach Verfahren gesucht worden, die es ermöglichen, Anwender von Desinfektionsmitteln zu schulen, ein Bewusstsein für das Vorhandensein von für das menschliche Auge unsichtbaren Keimen auf Oberflächen aller Art zu entwickeln und Desinfektionsmittel gleichförmig und ganzflächig korrekt aufzutragen.

Es ist bekannt, als Hilfsmittel, z.B. für Schulungen, fluoreszierende Cremes oder Lösungen einzusetzen, die auf Flächen oder Hände aufgetragen werden und für das Auge bei Tageslicht unsichtbar sind und dann mittels einer UV-Lampe sichtbar gemacht werden können. Durch dieses Verfahren kann zwar eine Kontamination und deren Übertragung simuliert werden, indem beispielsweise eine mit Fluoreszenzfarbstoffen versehene erste Hand eine zweite Hand berührt und danach mittels einer UV-Lampe Flecken auf der zweiten Hand sichtbar gemacht werden können, weil sich der Fluoreszenzfarbstoffe auf die zweite Hand übertragen hat. Bei Tageslicht bzw. Licht aus herkömmlichen Leuchtkörpern und ohne UV-Lampe funktioniert dieses Verfahren jedoch nicht.

Es sind Salben mit einer fluoreszierenden Substanz markiert worden, die anschließend auf beispielsweise die Hände aufgetragen wurden. Die Verteilung dieser Salbe auf der Handoberfläche konnte dann als Fluoreszenz mittels UV-Bestrahlung sichtbar gemacht werden. Als fluoreszierende Substanz zeigte insbesondere Vitamin-A-Acetat vorteilhafte Eigenschaften. In der DE 19838441 B4 wird ein weiterer Fluoreszenzindikator vorgeschlagen, der sich auf der Haut im UV-Licht kontrastreicher darstellen soll.

Leider kann durch dieses Verfahren der Erfolg einer Desinfektionsbehandlung nicht realitätsnah sichtbar gemacht werden, wie bei Behandlung mit einem Desinfektionsmittel, da der Fluoreszenzfarbstoff abgewaschen werden muss und nicht anders entfernt oder entfärbt werden kann. Auch ist der Einsatz einer UV-Lampe daran gebunden, dass die Umgebung ausreichend abgedunkelt ist und in der Regel können nur wenige Teilnehmer einer Schulung gleichzeitig das Ergebnis begutachten, da üblicherweise Kästen mit eingebauten UV-Lampen und umliegendem Sichtschutz eingesetzt werden (vergleiche z.B. DE 20210886 U1), so dass nur eine sehr begrenzte Anzahl von Teilnehmern gleichzeitig schauen können.

Ein anderes Verfahren zur Simulation von Keimübertragungen ist der Einsatz von sichtbarem oder unsichtbarem Testschmutz, um in Schulungen, z.B. Schulkindern, das Händewaschen näher zu bringen. Dabei werden die Hände entweder mit einer sichtbar eingefärbten Substanz (Lotion, Creme, Lösung) behandelt, um dann den Erfolg des Abwaschens besser sichtbar zu machen. Oder die Hände werden mit einer fluoreszierenden Substanz behandelt, welche zunächst unter einer UV-Lampe sichtbar gemacht wird, danach werden die Hände mit Wasser und Seife gewaschen und darauffolgend wieder unter den UV-Lampe betrachtet, um zu sehen, ob noch Fluoreszenz auf den Händen verblieben ist.

Beide Verfahren können zwar Kontamination simulieren und deren Abwaschen durch Wasser und Seife, nicht jedoch den Erfolg durch Aufbringen eines im professionellen Umfeld eingesetzten Hände- oder Flächendesinfektionsmittels, der durch die Wirkung des im Desinfektionsmittel eingesetzten Wirkstoffs erzielt wird.

Aus der DE102015218040 A1 ist ein Desinfektionsmittelspender umfassend einen ersten Vorratsbehälter mit einem darin enthaltenen Desinfektionsmittel und einen zweiten Vorratsbehälter mit einem darin enthaltenen Markierungsstoff bekannt, wobei in einem Mischabschnitt des Desinfektionsmittelspender bei der Ausgabe der Medien beide in Kontakt gebracht werden, wodurch der Markierungsstoff aktiviert und nach Auftragen auf eine Oberfläche wie Haut die desinfizierte Oberfläche durch eine Einfärbung für das menschliche Auge wahrnehmbar wird und z.B. die nachlassende Sterilität des Hautareals durch Ent- oder Umfärbung signalisiert wird. Als Markierungsstoff werden photochrome, thermochrome, elektrochromen, solvatochrome, ionochrome, tribochrome und piezochrome Farbstoffe vorgeschlagen, die den Farbumschlag bewirken. Zu den solvatochromen Farbstoffen wird angegeben, dass diese auch ionochrom oder halochrom sein können und z.B. auf pH-Änderungen reagieren, insbesondere zerfallen.

Die DE 10065941 A1 offenbart ein Verfahren zum Nachweis der Güte einer Reinigung und/oder Desinfektion von Flächen, wobei auf die zu reinigenden und/oder zu desinfizierenden Flächen vor der Reinigung und/oder Desinfektion Applikatoren umfassend einen flächigen Träger aufgebracht werden, die auf ihrer Rückseite mit der zu prüfenden Fläche lösbar verbunden sind und auf ihrer Vorderseite mit einer Testkontamination versehen sind, um nach der Reinigung und/oder Desinfektion deren Vollständigkeit mithilfe der Testkontamination auszuwerten und eine Güteziffer zuzuordnen, die die den Reinigungs- bzw. Desinfektionserfolg bewertet. Der Träger kann z.B. eine selbstklebende Etikette sein. Die Testkontamination kann farblich unterschiedliche Schichten umfassen. Wird die Testkontamination nur zum Teil abgereinigt, so wird hieraus, je nachdem, welche Schicht zum Vorschein kommt, ein Kriterium für die Reinigungsquantität gebildet, das visuell erfasst werden kann. In einer weiteren Variante kann eine stärkehaltige Schicht durch Aufsprühen von Jod einen Farbumschlag aufweisen. Der Reinigungserfolg wird dann erkennbar, wenn beim Aufsprühen von Jod kein Farbumschlag mehr erfolgt. Anstelle der Stärke wird auch eine Phenolphthalein-Lösung in Ethanol vorgeschlagen. Nachdem das Ethanol verdampft ist, bleiben Phenolphthaleinkristalle auf dem Träger zurück. Bei Kontakt mit einem basischen Kontaktstoff nach der Reinigung / Desinfektion mit einem pH-Wert zwischen 8.0 und 10.1 findet ein Farbumschlag nach rosa statt. In einer weiteren Variante der Erfindung ist das Phenolphthalein mit anderen Stoffen, die die Schicht bilden und reale Verschmutzungen repräsentieren, wie z. B. eine Mischung aus Stärke und Eiweiß, gemischt.

### Aufgabe der vorliegenden Erfindung

Aufgabe der vorliegenden Erfindung ist es, eine simulierte, zunächst unsichtbare Kontamination auf einer Fläche ohne UV-Lampe mit dem bloßen Auge sichtbar zu machen, nachfolgend diese dazu nutzen zu können, um Übertragungsmechanismen sichtbar zu simulieren (von einer Fläche auf eine oder mehrere andere) und die sichtbare Kontaminationssimulation durch eine spezielle Desinfektionssimulation wieder verschwinden zu lassen, so dass der Erfolg einer Desinfektion ohne den Einsatz von UV-Licht bei Tageslicht oder Zimmerbeleuchtung sichtbar gemacht wird.

### Zusammenfassung der Erfindung

Es wurde gefunden, dass ein pH-Indikator enthalten in einer ersten Anwendungszusammensetzung eingesetzt werden kann, eine Kontamination auf einer Fläche zu simulieren, während eine saure (Alternative A) oder basische (Alternative B) Zusammensetzung (zweite Anwendungszusammensetzung), die auf die Fläche anschließend ausgebracht wird, die Verkeimung, d.h. den zuvor unsichtbaren, weil farblosen, pH-Indikator, sichtbar macht, weil die saure oder basische Zusammensetzung den pH-Indikator in einen pH-Bereich überführt. der jenseits des Umschlagsbereiches von farblos nach farbig liegt.

Eine weitere umgekehrte Zugabe einer basischen (Alternative A) oder sauren (Alternative B) Zusammensetzung (dritte Anwendungszusammensetzung) bewirkt dann einen pH-Swing und überführt den pH-Indikator wieder zurück auf die andere Seite des Umschlagsbereiches von farbig nach farblos und simuliert damit die Wirkung von Desinfektion, nämlich das Unschädlichmachen der Verkeimung. Dieser Vorgang ist vorzugsweise reversibel.

Die erste Anwendungszusammensetzung, die den pH-Indikator enthält, ist vorzugsweise eine Lösung. Geeignete Lösungsmittel sind z.B. Wasser, Aceton, Ethanol, Propanol oder Isopropanol oder deren Mischungen, insbesondere Mischungen von Wasser mit Aceton, Ethanol, Propanol und/oder Isopropanol, insbesondere mit Ethanol.

Die zweite und dritte Anwendungszusammensetzung sind vorzugsweise wässrige Zusammensetzungen bzw. Lösungen, die unter Zugabe einer Säure oder Base sauer oder basisch eingestellt sind.

### Detaillierte Beschreibung der Erfindung

### Simulation von Kontamination:

Ein pH-Indikator, welcher in einem ersten pH-Bereich, von z.B. kleiner 9, farblos ist, wird als Bestandteil einer ersten Anwendungszusammensetzung auf eine Fläche oder mehrere Flächen aufgebracht, z.B. auf behandschuhte Hände, eine Testfläche in Form einer dünnen Platte, medizinische Gegenstände wie ein Stethoskop, eine Kanüle, eine Spritze, ein Stauschlauch oder einen Lebensmitteldummy wie z.B. ein ausgenommenes Huhn etc. oder in Hohlräume von Gegenständen eingebracht, z.B. in die Venenschläuche einer Dummy-Puppe, Lumen eines Endoskops etc..

Handelt es sich bei der ersten Anwendungszusammensetzung um eine Flüssigkeit kann die ausgebrachte Anwendungszusammensetzung zunächst trocknen.

Danach wird eine zweite Anwendungszusammensetzung (in dem Beispielsfall eine basische Lösung mit einem pH-Wert von z.B. größer 10,5) auf die Flächen aufgebracht, z.B. einer Flüssigkeit mit einer Viskosität, die das Versprühen der Lösung mittels eines Handsprühpumpe möglich macht, oder indem die Flüssigkeit mit einem Hilfsmittel, wie einem Tuch oder Schwamm verteilt wird.

Andererseits kann auch eine andere Applikationshilfe (z.B. eine Spritze oder einer Pipette) eingesetzt werden, um die zweite Anwendungszusammensetzung in Hohlräume einzubringen. Die unmittelbare oder verzögerte Reaktion der zweiten Anwendungszusammensetzung mit dem pH-Indikator in der ersten Anwendungszusammensetzung bewirkt eine Verfärbung auf den Flächen oder in den Hohlräumen von farblos in farbig, welche überall dort, wo sich der Indikator verfärbt, das Sichtbarmachen von Kontamination mit Keimen simuliert.

Wird die zweite Anwendungszusammensetzung auf die vorher mit dem Indikator behandelten behandschuhten Hände aufgebracht, so verfärben sich die behandschuhten Hände und die verfärbten Flächen simulieren eine Verkeimung der behandschuhten Hände, die nun sichtbar ist. Diese Simulation ist wichtig, um das Bewusstsein für die unsichtbare Kontamination von Keimen auf Oberflächen zu schärfen und die korrekte Durchführung einer Desinfektion zu schulen.

### Simulation von Keimübertragungen:

Eine Keimübertragung kann nun gezeigt werden, indem mit den behandschuhten Händen auf die verfärbten und noch feuchten Flächen, aufweisend die Kombination aus erster und zweiter Anwendungszusammensetzung, gefasst wird und dann wieder auf eine andere Fläche (inklusive heller Kleidung). Auch Gegenstände können auf den verfärbten Flächen abgestellt und dann auf eine andere Fläche gestellt werden, wo sie wiederum feuchte Verfärbungen hinterlassen.

### Simulation der Wirkung von Desinfektion:

Eine oder mehrere dritte Anwendungszusammensetzungen mit einem pH-Wert unter 9 werden nachfolgend mittels Versprühen oder direktem Ausbringen auf die verfärbten Flächen gebracht und verteilt, z.B. mittels eines Tuches oder Schwammes verrieben oder auf ein Tuch oder einen Schwamm gesprüht, welches dann über die verfärbten Flächen gerieben wird. Wird die dritte Anwendungszusammensetzung auf die behandschuhten Hände gebracht, wird diese direkt verrieben. Die Verfärbungen verschwinden durch die Reaktion der dritten Anwendungszusammensetzung mit der Kombination von erster und zweiter Anwendungslösung schnell oder langsam, je nach pH Wert der Anwendungszusammensetzung und können damit zum einen die Desinfektionswirkung an sich und zum anderen die Dauer der Desinfektionswirkung simulieren. Diese Simulation ist wichtig, weil sie ein Bewusstsein schafft, dass Desinfektion erfolgreich Keime eliminiert.

Ein schnelles Verschwinden simuliert eine schnelle Desinfektionswirkung, ein verzögertes Verschwinden simuliert eine benötigte Einwirkzeit eines Wirkstoffs oder eines Wirkstoffgemischs von beispielsweise 30 Sekunden oder 1 Minute oder länger. Dort wo die dritte Anwendungszusammensetzung nur auf die erste oder nur auf die zweite Anwendungszusammensetzung trifft passiert gar nichts, d.h. die jeweiligen Kombinationen der Anwendungszusammensetzungen bleiben farblos.

Während der Dauer der Wirkung, in der der Indikator immer noch verfärbt ist, kann durch das Wischen mit einem Tuch oder Schwamm eine richtige oder falsche Wischtechnik, d.h. eine Wischtechnik zur optimalen Benetzung oder schlechten Benetzung der Flächen gezeigt werden. Überall dort, wo die dritte Anwendungszusammensetzung nicht hin gewischt wird, bleiben die Verfärbungen erhalten, so dass eine schlechte Benetzungstechnik sofort sichtbar wird. Diese Simulation ist wichtig, um die richtige Anwendungstechnik von Desinfektionsmitteln bewusst zu machen und zu schulen.

Eine erneute Simulation von Kontamination kann durch erneutes Aufbringen der zweiten Anwendungszusammensetzung vorgenommen werden, wodurch wieder Verfärbungen auftreten. Das Ausbringen der weiteren Anwendungszusammensetzung kann wiederum eine erneute Desinfektion simulieren und so fort.

Ein Schulungsset umfasst zumindest die folgenden Bestandteile:
1. eine erste farblose Anwendungszusammensetzung enthaltend den Indikator,
2. eine zweite Anwendungszusammensetzung mit
   A) einem pH-Wert unter dem Umschlagsbereich des Indikators oder
   B) einem pH-Wert über dem Umschlagsbereich des Indikators,
   jeweils um den Indikator von farblos nach farbig zu verändern;
3. eine dritte Anwendungszusammensetzung mit
   A) einem pH-Wert über dem Umschlagsbereich des Indikators oder
   B) einem pH-Wert unter dem Umschlagsbereich des Indikators,
   jeweils um die Kombination von erster und zweiter Anwendungszusammensetzung von farbig nach farblos zu verändern.

Die zweite Anwendungszusammensetzung kann z.B. aufgesprüht, mit einem Tuch oder Schwamm ausgebreitet oder in Hohlräume mit einer Spritze eingebracht werden.

Die dritte Anwendungszusammensetzung kann z.B. vorkonfektioniert in Form eines Vliestuchspenders mit Tuchrolle oder mit gefaltetem Tuchstapel und jeweils mit der dritten Anwendungszusammensetzung getränkten Tüchern zur Verfügung gestellt werden (auch als Wipes oder Feuchttücher bezeichnet). Die Simulation kann auch so erfolgen, dass behandschuhte Hände mittels eines Einhand-Desinfektionsmittelspenders mit der dritten Anwendungszusammensetzung besprüht werden.

Weiterhin kann das Set enthalten, einen oder zwei oder mehrere der folgenden Utensilien: eine Schutzbrille, ein paar Handschuhe, insbesondere Einmalhandschuhe, ein Tuch, einen Schwamm und/oder einen Schutzkittel.

Als Flächen sind geeignet diverse medizinische Gegenstände, diverse Test-Flächen z.B. als Platten, unterschiedliche Kleidungsstücke, unterschiedliche Dummys, z.B. Pflegearm, Patientenpuppen, Lebensmittel oder unterschiedliche Handschuhtypen oder Tücher.

Ein besonders geeigneter pH-Indikator ist Thymolphthalein. Thymolphthalein ist ein Triphenylmethanfarbstoff und gehört zur Familie der Phthaleine. Thymolphthalein ist ein weißes kristallines Pulver und in Wasser bei Raumtemperatur praktisch nicht löslich. Es findet meist in ethanolischer Lösung (0,1 Gew.% Thymolphthalein) Verwendung. Es ist selbst eine schwache Säure. Bei einem pH-Wert von 0 bis etwa 9,3 ist gelöstes Thymolphthalein farblos, bei höherem pH-Wert (10,5) färbt sich die Lösung blau, im stark alkalischen Medium, bei einem pH-Wert nahe 14, wird sie wieder farblos.

Flächen im Sinne der vorliegenden Erfindung schließt die Oberfläche von Körperteilen wie Händen mit ein. Keime sind z.B. Viren, Bakterien und / oder Pilze oder sonstige Erreger, welche Krankheiten auslösen können und durch Desinfektion inhibiert werden.

Es ist aber auch möglich die Anwendungszusammensetzung(en) als dünnen im Wesentlichen unsichtbaren Film aufzubringen. Hierfür kann die Anwendungszusammensetzung z.B. einen die Viskosität erhöhenden Zusatz oder gelbildenden Zusatz enthalten (Verdickungsmittel). Beispiel hierfür sind modifizierte Cellulosen (z.B. Methylcellolose, Hydroxyethylcellulose, Carboxymethylcellulosen, Hydroxypropylmethylcellulose, Hydroxypropylcellulose, Ethylhydroxyethylcellulose), Xanthan, Stärke, Glucomannan, Gelatine, Casein, Polyvinylalkohole, Polyacrylsäure, Polymethacrylsäuren, Polyacrylamide, Polyvinylpyrrolidon sowie Polyethylenglykole.

Weiterhin können die Anwendungszusammensetzung(en) typische Netzmittel enthalten.

Ggf. kann die zweite Anwendungszusammensetzung im relevanten pH-Bereich gepuffert sein, um erst nach Überschreiten der Pufferkapazität den Farbumschwung zu zeigen. Dies simuliert eine verzögerte Wirkung des Desinfektionsmittels (dritte Anwendungszusammensetzung).

Ein Beispiel für die erste Anwendungszusammensetzung ist eine Lösung des Indikators in einem Lösungsmittel enthaltend Wasser und Ethanol, beispielsweise 10 bis 80 bzw. bis zu etwa 100 Gew.% Ethanol mit Rest Wasser.

Ein Beispiel für die zweite Anwendungszusammensetzung ist eine alkalische Lösung mit einem pH-Wert von pH 10 bis pH 13,5, bevorzugt mit einem pH-Wert von 12 bis 12,5. Als Basen können alle üblichen Basen eingesetzt werden, bevorzugt Kalilauge und/oder Natronlauge.

Ein Beispiel für die dritte Anwendungszusammensetzung ist eine wässrige saure Lösung mit einem pH-Wert von 1 bis 4, bevorzugt mit einem pH von pH 1,2 bis pH 1,6. Als Säuren können alle üblichen organischen und anorganischen Säuren eingesetzt werden, bevorzugt Milchsäure und Zitronensäure.

Die Simulation der Desinfektion kann im Einzelnen wie folgt erfolgen:
Präparation der Oberflächen von Testplatten und anderer Testgegenstände (Stauschlauch, Stethoskop, Lebensmittel-Dummy) oder von behandschuhten Händen mit der ersten Anwendungszusammensetzung. Trocknen lassen der ersten Anwendungszusammensetzung. Vor Versuchsbeginn sollte die erste Anwendungszusammensetzung nach einer Ausführungsform im Wesentlichen evaporiert sein.

Die zweite Anwendungszusammensetzung wird entweder auf die Oberflächen aufgeträufelt oder gesprüht.

Zur Simulation von Desinfektion wird die farblose dritte Anwendungszusammensetzung direkt auf die blauen Flächen gesprüht und mit einem Zellstofftuch verrieben und alternativ auf ein Zellstofftuch gesprüht und dann auf den blauen Flächen verrieben. Die blauen Tröpfchen/Flächen verschwinden und simulieren die Wirkung eines Desinfektionsmittels auf Keime. Auch die behandschuhten Hände werden mit der dritten Anwendungszusammensetzung behandelt, die Wirkung von Händedesinfektion wird sichtbar, indem die blauen Flächen unsichtbar werden.

Die Erfindung wird anhand eines Ausführungsbeispiels erläutert.

Herstellung der ersten Anwendungszusammensetzung (Anwendungslösung 1):
0,1 g Thymolphtalein wurde in 100 ml Ethanol (80% v/v, Rest Wasser) gelöst und in eine Flasche gefüllt.

Herstellung der zweiten Anwendungszusammensetzung (Anwendungslösung 2):
2 g Natriumhydroxid wurde in 498 ml Wasser (aqua purificata) gelöst und in eine Flasche gefüllt, die Flasche mit der alkalischen Lösung von pH 12 - pH 12,5 (bei 20°C) wurde mit einer Handsprühpumpe (Trigger-Sprayer) versehen.

Herstellung der dritten Anwendungszusammensetzung (Anwendungslösung 3): 9,6 g Zitronensäure wurde in 490,4 ml Wasser (aqua purificata) gelöst und in eine Flasche gefüllt. Die Flasche mit der sauren Lösung von pH 1,2 bis pH 1,6 wurde mit einer Handsprühpumpe (Trigger-Sprayer) versehen.

### Durchführung:

Flächen (einschließlich Handschuhe) wurden durch Aufbringen von Anwendungslösung 1 präpariert, allerdings nicht sichtbar, da die Anwendungslösung 1 farblos ist. Anwendungslösung 1 wurde auch mittels einer Spritze und durch eine periphere Verweilkanüle in die Venen eines Pflegearms injiziert und dieser so ebenfalls unsichtbar präpariert.

Anwendungslösung 2 ist ebenfalls farblos und wurde nach dem Auftrocknen von Anwendungslösung 1 auf die Oberflächen aufgesprüht. Es bilden sich blaue Tröpfchen bzw. feuchte blaue Flächenbereiche durch die Reaktion der farblosen Anwendungslösung 2 mit der farblosen Anwendungslösung 1.

Die Blaufärbung simulierte das Sichtbarwerden von an sich unsichtbarer Kontamination. Solange die blauen Flächen aus der Reaktion von Anwendungslösung 2 mit Anwendungslösung 1 feucht sind, konnten Keimübertragungen simuliert werden, indem mit behandschuhten Händen in die farbigen Tröpfchen/Flächenbereiche gefasst wurde und dann wiederum mit den Handschuhen auf andere Flächen gefasst wurde. Es bilden sich blaue Abdrücke auf den anderen Flächenbereichen.

Ebenso wurde exemplarisch für einen beliebigen Gegenstand eine Nierenschale in den blauen Flächen abgestellt und wiederum nachfolgende auf einer anderen Fläche abgestellt. Es bildeten sich mehrere blaue Abdrücke, die die Übertragung von Keimen simulierten.

Die Anwendungslösung 2 wurde auch direkt auf behandschuhte Hände gesprüht, es bilden sich blaue Flächen, die Keimkontamination simulieren. Mit den behandschuhten Händen werden wiederum weitere Flächen und Gegenstände (hier Stethoskop, Pflegearm etc.) oder auch helle Kleidung angefasst und die Übertragung simuliert.

In einer weiteren Simulation wurde Anwendungslösung 2 in eine Spritze gegeben und in den Venenkatheter eines Pflegearms injiziert. Die vorher mit Anwendungslösung 1 präparierten Venen des Pflegearms wurden durch die Reaktion mit der Anwendungslösung 2 blau, um zu simulieren, was bei "unsauberem Arbeiten" mit kontaminierten Händen passiert und wie eine Übertragung von Keimen in die Blutbahn von Patienten funktioniert.

Zur Simulation von Desinfektion wurde die farblose Anwendungslösung 3 direkt auf die blauen Flächen gesprüht und mit einem Zellstofftuch verrieben und alternativ auf ein Zellstofftuch gesprüht und dann auf den blauen Flächen verrieben. Die blauen Tröpfchen/Flächen verschwanden und simulierten die Wirkung eines Desinfektionsmittels auf Keime. Auch die behandschuhten Hände wurden mit der Anwendungslösung 3 behandelt, die Wirkung von Händedesinfektion wurde sichtbar, indem die blauen Flächen unsichtbar wurden.

Die Durchführung wurde während einer Schulung wiederholt, solange die Anwendungslösung 1 noch auf den Flächen vorhanden war: Das Sichtbarmachen von unsichtbaren Keimen mit anschließender Übertragung und wiederum anschließender Desinfektion wurde durch das Erscheinen, Übertragen und Verschwinden der blauen Farbe simuliert.

## Patentansprüche

1. Verfahren zur Simulation einer Verkeimung und zur Simulation der Desinfektion umfassend:
i) Bereitstellen einer ersten Anwendungszusammensetzung umfassend zumindest einen pH-Indikator, wobei die erste Anwendungszusammensetzung farblos ist;
ii) Bereitstellen einer zweiten Anwendungszusammensetzung umfassend nach Alternative A zumindest eine Säure und aufweisend einen niedrigeren pH als der Umschlagsbereich des pH-Indikators oder nach Alternative B eine Base und aufweisend einen höheren pH als der Umschlagsbereich des pH-Indikators;
iii) Bereitstellen einer dritten Anwendungszusammensetzung umfassend nach Alternative A eine Base und aufweisend einen höheren pH als der Umschlagsbereich des pH-Indikators oder nach Alternative B eine Säure und aufweisend einen niedrigeren pH als der Umschlagsbereich des pH-Indikators;
wobei Alternative B angewandt wird, wenn der pH-Indikator unterhalb seines Umschlagsbereich farblos ist, und
Alternative A angewandt wird, wenn der pH-Indikators oberhalb seines Umschlagsbereich farblos ist;
iv) Ausbringen der ersten Anwendungszusammensetzung zumindest partiell auf eine Fläche;
iv) Ausbringen der zweiten Anwendungszusammensetzung zumindest partiell auf die Fläche unter Verfärbung der Flächenbereiche, die zuvor mit der ersten Anwendungszusammensetzung behandelt wurden, damit die zuvor unsichtbare, weil farblose, erste Anwendungszusammensetzung sichtbar gemacht wird, wobei der pH-Indikator durch die zweite Anwendungszusammensetzung in einen pH-Bereich überführt wird, der jenseits des Umschlagsbereiches des pH-Indikators von farblos nach farbig liegt;
v) Ausbringen der dritten Anwendungszusammensetzung zumindest teilweise auf die Flächenbereiche, die sich durch den pH-Indikator verfärbt haben, um den pH-Indikator durch die dritte Anwendungszusammensetzung in einen pH-Bereich zu überführen, der jenseits des Umschlagsbereiches des pH-Indikators von farbig nach farblos liegt, um den Desinfektionserfolg zu simulieren.

2. Verfahren nach Anspruch 1 wobei die erste, zweite und/oder dritte Anwendungszusammensetzung eine Flüssigkeit ist, umfassend ein Verdünnungsmittel, insbesondere eine Lösung umfassend ein Lösungsmittel.

3. Verfahren nach Anspruch 1 oder 2, wobei das Verdünnungsmittel bzw. Lösungsmittel für die zweite und/oder dritte Anwendungszusammensetzung Wasser ist, insbesondere zu größer 80 Gew.% bis 100 Gew.%, bezogen auf die Anwendungszusammensetzung.

4. Verfahren nach zumindest einem der vorhergehenden Ansprüche, wobei das Verdünnungsmittel bzw. das Lösungsmittel für die erste Anwendungszusammensetzung Aceton, Ethanol, Propanol oder Isopropanol oder deren Mischungen enthält, insbesondere in Mischung mit Wasser.

5. Verfahren nach zumindest einem der vorhergehenden Ansprüche, wobei die zweite und dritte Anwendungszusammensetzung vorzugsweise wässrige Zusammensetzungen sind, die unter Zugabe einer Säure oder Base sauer oder basisch eingestellt sind.

6. Verfahren nach zumindest einem der vorhergehenden Ansprüche, wobei die zweite Anwendungszusammensetzung (Alternative B) eine alkalische Lösung mit einem pH-Wert von pH 10 bis pH 13,5, bevorzugt mit einem pH-Wert von 12 bis 12,5 ist.

7. Verfahren nach zumindest einem der vorhergehenden Ansprüche, wobei die dritte Anwendungszusammensetzung (Alternative B) eine sauere Lösung mit einem pH-Wert von 1 bis 4, bevorzugt mit einem pH-Wert von pH 1,2 bis pH 1,6 ist.

8. Verfahren nach zumindest einem der vorhergehenden Ansprüche, wobei als Base Kalilauge und/oder Natronlauge eingesetzt werden.

9. Verfahren nach zumindest einem der vorhergehenden Ansprüche, wobei als Säure Milchsäure und/oder Zitronensäure eingesetzt werden.

10. Verfahren nach zumindest einem der vorhergehenden Ansprüche, wobei der pH-Indikator Thymolphtalein ist oder enthält.

11. Verfahren nach zumindest einem der vorhergehenden Ansprüche, wobei das farbige Gemisch der ersten und der zweiten Anwendungszusammensetzung auf weitere Flächenabschnitte übertragen wird zur Simulation der Verschleppung der Verkeimung.

12. Schulungsset zur Simulation einer Verkeimung und zur Simulation der Desinfektion, umfassend separat voneinander zumindest die folgenden Bestandteile:
a) eine erste farblose Anwendungszusammensetzung enthaltend einen pH-Indikator,
b) eine zweite Anwendungszusammensetzung mit
A) einem pH-Wert unter dem Umschlagsbereich des Indikators oder
B) einem pH-Wert über dem Umschlagsbereich des Indikators,
jeweils um den Indikator von farblos nach farbig zu verändern;
c) eine dritte Anwendungszusammensetzung mit
A) einem pH-Wert über dem Umschlagsbereich des Indikators oder
B) einem pH-Wert unter dem Umschlagsbereich des Indikators,
jeweils um die Kombination von erster und zweiter Anwendungszusammensetzung von farbig nach farblos zu verändern.

13. Schulungsset nach Anspruch 12, wobei die zweite oder die dritte Anwendungszusammensetzung oder beide in einem Behältnis mit Handsprühpumpe bereitgestellt sind.

14. Schulungsset nach Anspruch 12 oder 13, umfassend weiterhin umfassend zumindest eines der folgenden Mittel:
d) eine Fläche auf die die drei Anwendungszusammensetzungen ausgebracht werden;
e) ein paar Handschuhe;
f) einen oder mehrere Lappen und/oder Schwämme.

15. Schulungsset nach Anspruch 12, 13 oder 14, wobei der pH-Indikator Thymolphtalein ist.
